# FASCICULE DE BREVET EUROPEEN

(11) **EP 3 804 073 B1**
(45) Date de publication et mention de la délivrance du brevet: **28.06.2023**
(21) Numéro de dépôt: 19737179.2
(22) Date de dépôt: 29.05.2019
(51) Int. Cl.: H02J 3/40, B64D 41/00, H02J 9/04

(54) **SYSTÈME DE SYNCHRONISATION DE SOURCES D'ÉNERGIE COUPLÉES D'UN AÉRONEF**
SYSTEM ZUR SYNCHRONISIERUNG VON MIT EINEM FLUGZEUG GEKOPPELTEN ENERGIEQUELLEN
SYSTEM FOR SYNCHRONISING ENERGY SOURCES COUPLED TO AN AIRCRAFT

(30) Priorité: 29.05.2018 FR 1854575
(43) Date de publication de la demande: 14.04.2021
(73) Titulaire: SAFRAN, 75015 Paris (FR); Safran Electrical & Power, 31702 Blagnac Cedex (FR)
(72) Inventeur: SALANNE, Jean-Philippe, 77550 MOISSY-CRAMAYEL (FR); PETIBON, Stéphane, 77550 MOISSY-CRAMAYEL (FR); ROUGIER, Florent, 77550 MOISSY-CRAMAYEL (FR); DEL CASTILLO, José, 31702 BLAGNAC CEDEX (FR); SALIMIAN, Alexander, 31702 BLAGNAC CEDEX (FR)
(74) Mandataire: Regimbeau
(86) Numéro de dépôt international: PCT/FR2019/051278
(87) Numéro de publication internationale: WO 2019/229390

(56) Documents cités:
- EP-A1- 1 515 426
- EP-B1- 1 515 426
- WO-A1-2018/051003

## Description

### DOMAINE TECHNIQUE GENERAL

L'invention concerne le domaine de l'hybridation, c'est-à-dire l'utilisation simultanée, de sources d'énergie électrique dans un aéronef.

Plus précisément, l'invention a pour objet un système, ainsi qu'un procédé de synchronisation de sources d'énergie couplées sur un réseau électrique alimentant au moins une charge électrique d'un aéronef.

### ETAT DE LA TECHNIQUE

Dans la suite de la description, l'aéronef considéré est, à titre d'exemple, un avion.

Une source électrique de secours couramment mise en oeuvre dans un avion se présente sous la forme d'une éolienne de secours, fréquemment désignée sous la dénomination « RAT », acronyme anglais de « Ram Air Turbine ».

Une éolienne de secours est déployée dans des situations d'urgence à bord d'un avion, pour générer une puissance électrique adaptée permettant à l'avion de voler suffisamment longtemps jusqu'à son atterrissage. L'éolienne de secours comporte une hélice formée de pales dont la vitesse de rotation est constante (+/-10%). Un système mécanique permet de réguler la vitesse de rotation en fonction de la pression exercée sur les pales. La rotation de cette hélice entraine un générateur qui fournit la puissance de secours nécessaire à un bus alimentant électriquement un certain nombre de charges électriques critiques telles les commandes de vol et des circuits avioniques clés.

Typiquement, une éolienne de secours est dimensionnée de sorte à fournir une valeur maximale de puissance en vue de répondre à des pics éventuels de consommation du réseau électrique de l'avion. En pratique, ces pics surviennent rarement. La plupart du temps, la demande en puissance électrique est bien plus faible, et l'éolienne de secours est capable de fournir une puissance électrique plus importante que le besoin. Il en résulte des éoliennes de secours surdimensionnées, encombrantes, lourdes et coûteuses.

Pour éviter ce surdimensionnement, il est connu d'hybrider en parallèle de la source électrique principale, ici l'éolienne de secours, une source électrique auxiliaire, par exemple une source formée de supercondensateurs, de batteries ou autres, afin de fournir simultanément la puissance qui fait défaut.

D'autres types d'hybridations électriques peuvent être réalisées sur le même principe, à titre d'exemples : l'association parallèle d'une pile à combustible en tant que source électrique principale avec une source électrique auxiliaire, afin de prévenir tout risque de noyage de la pile à combustible et/ou de détérioration prématurée de celle-ci ; l'association parallèle d'une unité de puissance auxiliaire alimentée en carburant en tant que source électrique principale avec une source électrique auxiliaire afin de prévenir tout risque de surconsommation en carburant ou de surchauffe de cette unité.

Dans un tel système d'hybridation électrique, la mise en oeuvre d'un couplage électrique des sources électriques alternatives est d'une importance particulière. En effet, la sortie des sources de puissance doit être parfaitement synchronisée afin d'effectuer un transfert de puissance efficient.

WO 2018/051003 A1 décrit un tel système d'hybridation électrique dans lequel la source électrique auxiliaire est synchronisée avec la tension du bus électrique alimentant les charges électriques.

Usuellement, la synchronisation des sources électriques alimentant le réseau électrique se fait via un contrôle « PLL » (pour Phase-Locked Loop en anglais, boucle à verrouillage de phase en français). Cette synchronisation est réalisée en utilisant les tensions du réseau électrique comme références pour le contrôle PLL. Cependant, ces tensions réseau peuvent être perturbées (harmoniques liées aux charges électriques réseau, courts circuits, etc...) impactant ainsi le contrôle PLL et par conséquent la synchronisation.

La synchronisation des sources électriques est donc fortement dépendante de la qualité du réseau électrique, et des perturbations liées à ce dernier. De telles contraintes peuvent ne pas être acceptables dans le contexte où la fiabilité est un critère essentiel. Un tel contexte est particulièrement présent dans le cas de sources électriques de secours d'un aéronef.

EP 1 515 426 A1 décrit un système de génération électrique à fréquence fixe, apte à être disposé en sortie d'un moteur à régime variable, qui comprend un étage primaire, qui est un générateur à aimants permanents, qui fournit l'énergie audit système lui permettant d'être autonome, un étage secondaire, qui est une excitatrice, qui contrôle la magnétisation d'un étage tertiaire. L'étage tertiaire, qui est un générateur principal, est l'étage de puissance de production de l'énergie électrique.

### PRESENTATION DE L'INVENTION

La présente invention a pour but de remédier aux inconvénients précités. Plus précisément, la présente invention a pour but de proposer une solution permettant d'optimiser et de robustifier la synchronisation de différentes sources électriques sur un même réseau électrique alternatif.

Dans ce but, la présente invention se rapporte selon un premier aspect à un système de synchronisation de sources d'énergie couplées sur un réseau électrique alimentant au moins une charge électrique d'un aéronef, ledit système comprenant :
- une source principale d'énergie électrique alimentant ladite charge électrique comprenant une génératrice multi-étage, ladite génératrice multi-étage comprenant :
   - un étage primaire comprenant un générateur à aimants permanents,
   - un étage secondaire comprenant une excitation, et
   - un étage tertiaire comprenant un générateur principal ;
- une source auxiliaire d'énergie électrique alimentant ladite charge électrique;
- un dispositif de synchronisation de la source principale et de la source auxiliaire configuré pour :
   - mesurer une tension électrique en sortie de l'étage primaire de la source principale, et
   - commander l'alimentation de ladite charge électrique par la source auxiliaire d'énergie électrique à une tension électrique asservie sur les caractéristiques de fréquence et de phase de la tension électrique de l'étage primaire.

Avantageusement, l'invention permet de robustifier la synchronisation de différentes sources électriques sur un même réseau électrique alternatif. En conséquence, ce type de commande est particulièrement adapté aux applications aéronautiques par la robustesse qu'elle implique et sa simplicité d'utilisation d'autant que les générateurs aéronautiques sont dans la majorité des cas des générateurs multi-étages.

Avantageusement, mais facultativement, le système selon l'invention peut en outre comprendre au moins l'une des caractéristiques suivantes :
- la source auxiliaire d'énergie électrique est connectée en parallèle de la source principale par l'intermédiaire d'un convertisseur de puissance continue alternatif DC/ AC;
- la source principale d'énergie électrique correspond à une source rotative génératrice d'énergie électrique ;
- la source principale est une éolienne de secours, un turbogénérateur, un groupe auxiliaire de puissance, un générateur de fréquence variable, ou un générateur à fréquence fixe ;
- le système comprend un dispositif de contrôle configuré pour commander l'alimentation électrique de ladite charge électrique par la source principale rotative génératrice d'énergie électrique, la fréquence de rotation de la source principale rotative étant subite ou régulée dans un intervalle de fréquence prédéterminé ;
- le dispositif de synchronisation est configuré pour commander via l'intermédiaire du convertisseur l'alimentation électrique de ladite charge électrique par la source auxiliaire d'énergie électrique à une tension électrique asservie sur les caractéristiques de fréquence et de phase de la tension électrique de l'étage primaire lorsqu'une fréquence d'une tension électrique en sortie de la source principale atteint une valeur seuil de fréquence donnée, de manière à fournir un complément d'alimentation électrique à la charge électrique.

Selon un deuxième aspect, l'invention concerne un procédé de synchronisation de sources d'énergie couplées sur un réseau électrique alimentant au moins une charge électrique d'un aéronef, mis en oeuvre par un système de synchronisation de sources d'énergie couplées sur un réseau électrique alimentant ladite charge électrique selon le premier aspect, ledit procédé comprenant les étapes consistant à :
- mesurer par le module de synchronisation, la fréquence électrique en sortie de l'étage primaire ;
- commander par le dispositif de contrôle auxiliaire, l'alimentation de ladite charge électrique par la source auxiliaire d'énergie électrique à une fréquence électrique synchronisée sur la fréquence électrique de de l'étage primaire .

Avantageusement, mais facultativement, le procédé selon l'invention peut en outre comprendre au moins la caractéristique suivante :
le procédé comporte une étape pour :
- comparer la fréquence des tensions électriques en sortie de l'étage primaire à une valeur seuil de fréquence donnée et exécuter l'étape de commande par ledit dispositif de synchronisation lorsque la fréquence d'une tension électrique en sortie de la source principale atteint la valeur seuil de fréquence donnée de manière à fournir un complément d'alimentation électrique à la charge électrique.

Selon un troisième aspect, l'invention concerne un produit programme d'ordinateur comprenant des instructions de code pour l'exécution du procédé selon le troisième aspect lorsque ce programme est exécuté par un processeur.

### PRESENTATION DES FIGURES

D'autres caractéristiques et avantages apparaîtront à la lecture de la description qui va suivre d'un mode de réalisation. Cette description sera donnée en référence au dessins annexés dans lequel :
- la figure 1 illustre un système de synchronisation de sources d'énergie couplées sur un réseau électrique alimentant au moins une charge électrique d'un aéronef selon l'invention ; et
- la figure 2 illustre des étapes d'un procédé de synchronisation de sources d'énergie couplées sur un réseau électrique alimentant au moins une charge électrique d'un aéronef selon l'invention.

### DESCRIPTION DETAILLEE

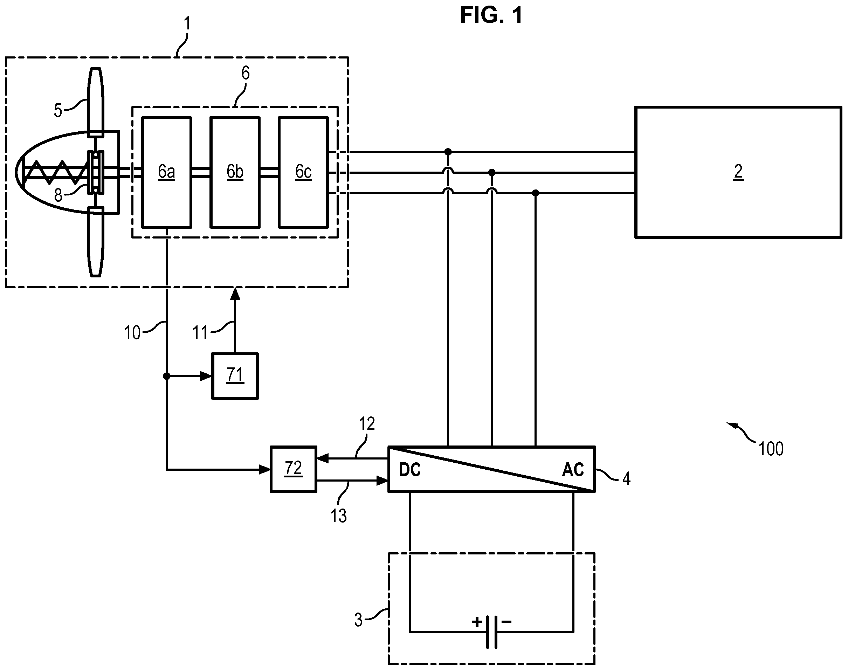

La figure 1 illustre un système de synchronisation (100) de sources d'énergie couplées dans un aéronef selon un mode de réalisation comprenant :
- une source principale 1 génératrice d'énergie électrique, communément désignée sous l'appellation « génératrice principale », connectée à au moins une charge électrique 2 ;
- une source auxiliaire 3 d'énergie électrique connectée en parallèle de la source principale d'énergie électrique par l'intermédiaire d'un convertisseur 4, par exemple un convertisseur de puissance continu alternatif DC/ AC pour un réseau électrique fonctionnant en courant alternatif.

Dans l'exemple de la figure 1, la source principale 1 génératrice d'énergie est une éolienne de secours comprenant des pales 5 ainsi qu'un générateur 6 électrique relié à la charge électrique 2 de sorte à alimenter électriquement celle-ci. Cependant d'autres sources principales 1 génératrice d'énergie peuvent être envisagées, à titre d'exemple : une turbine à gaz, une unité de puissance auxiliaire alimentée en carburant, un turbogénérateur, un groupe auxiliaire de puissance (en anglais « Auxiliary Power Unit » : APU), un générateur de fréquence variable (en anglais « Variable Frequency Generator » : VFG), ou encore un générateur à fréquence fixe (en anglais « Integrated Drive Generator » : IDG).

Le générateur 6 électrique est basée sur un système à trois étages :
- un étage primaire 6a appelé « générateur à aimants permanents » (PMG) qui fournit l'énergie électrique permettant au système d'être autonome ;
- un étage secondaire d'excitation 6b, appelé « excitatrice », qui sert à contrôler la magnétisation d'un étage tertiaire 6c; et
- un étage tertiaire 6c, appelé « générateur principal », qui est l'étage de puissance de production d'énergie électrique.

La source auxiliaire 3 d'énergie électrique peut être réalisée par un ou plusieurs éléments tels un batterie d'accumulateur, une supercapacité, un volant d'inertie, une pile à combustible, une pile thermique, un générateur rotatif associé à une électronique de puissance, ou encore par l'association de ces différents éléments.

La source auxiliaire 3 d'énergie électrique permet d'alimenter électriquement le convertisseur 4 qui délivre à la charge électrique 2, si besoin, une puissance électrique supplémentaire en complément de la source principale 1. Une telle puissance complémentaire est, par exemple, délivrée en vue de prévenir tout risque de calage d'une éolienne de secours, utilisée en tant que source principale 1, lorsque le niveau d'utilisation de la source principale 1 atteint un niveau prédéterminé. Par ailleurs, bien qu'une seule charge électrique 2 soit ici représentée, il est entendu que la source principale 1 génératrice et le convertisseur 4 peuvent être reliés par l'intermédiaire d'un bus d'alimentation électrique à une pluralité de charges électriques 2. Les charges électriques 2 sont, à titre d'exemple, des actionneurs de contrôle de vol, des unités de calcul, ou encore des charges électriques essentielles au bon déroulement du vol de l'aéronef.

Un autre mode de réalisation pour l'alimentation de la charge électrique 2 peut être envisagé lorsque la source principale 1 est une source rotative génératrice d'énergie électrique. La source principale 1 peut être, à titre d'exemple, une éolienne de secours ou une turbine à gaz.

Une source rotative génératrice d'énergie électrique est couramment associée à un régulateur de vitesse 8 mécanique. A titre d'exemple, pour une éolienne de secours comprenant un générateur 6 électrique synchrone, un régulateur de vitesse 8 permet d'adapter l'angle de calage de ses pales 5 (correspondant à l'angle formé par une pale et le plan de rotation de la pale) de manière à fournir une vitesse de rotation régulée, et donc une fréquence de rotation régulée dans un intervalle de fréquence, mais non-constante. La fréquence électrique en sortie du générateur 6 électrique de l'éolienne est alors proportionnelle à la fréquence de rotation.

Dans des conditions nominales de fonctionnement, la source principale 1 rotative alimente électriquement la charge électrique 2 à une fréquence électrique pouvant être reliée à une fréquence de rotation régulée/contenue dans un intervalle de fréquence prédéterminé. Plus précisément, cette fréquence de rotation de la source principale rotative 1 est régulée par rapport à une valeur de fréquence nominale et les bornes de l'intervalle prédéterminé correspondent aux oscillations en fréquence autour de la fréquence nominale. A titre d'exemple, si la source principale 1 rotative est une éolienne de secours, la borne supérieure et la borne inférieure de l'intervalle prédéterminé se situent typiquement à plus ou moins 10% de la fréquence nominale choisie.

Dans le mode de réalisation envisagé, la fréquence électrique en sortie de la source principale 1 est mesurée et comparée avec une valeur seuil de fréquence. Dans un cas synchrone, la fréquence électrique étant directement reliée à la fréquence de rotation, cette valeur seuil de fréquence peut correspondre à la borne inférieure de l'intervalle de fréquence prédéterminé, ou à une fréquence proche de cette borne inférieure, par exemple supérieure à celle-ci de quelques dizaines de Hertz.

La source principale 1 rotative peut être commandée et supervisée par un dispositif de contrôle 71 avec lequel elle est interfacée.

Le dispositif de contrôle 71 est configuré pour commander l'alimentation électrique de la source principale 1 rotative. A titre d'exemple, pour une éolienne de secours comprenant un générateur 6 électrique synchrone, le dispositif de contrôle 71 est configuré pour réceptionner (flèche 10) la tension en sortie de la génératrice et commander (flèche 11) la source principale 1 de manière à réguler le niveau de tension du réseau électrique à une valeur fixe. Ainsi, le dispositif de contrôle 71 peut réguler le niveau de tension via l'étage secondaire 6b du générateur 6 électrique.

Le dispositif de contrôle 71 peut être également interfacé avec un dispositif de synchronisation 72 interfacé avec la source auxiliaire 3 par l'intermédiaire du convertisseur 4.

Le convertisseur 4 étant connecté en parallèle de la source principale 1, le dispositif de synchronisation 72 peut être capable de déterminer la fréquence électrique en sortie de la source principale 1, c'est-à-dire la fréquence du bus électrique alimentant la charge électrique 2.

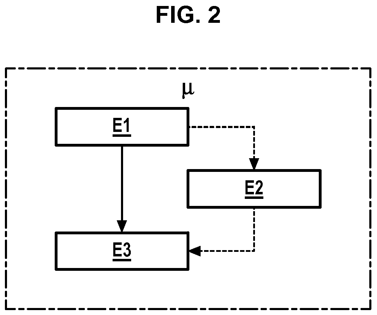

La figure 2 illustre certaines étapes d'un procédé de synchronisation de sources d'énergie 1, 3 couplées sur un réseau électrique alimentant au moins une charge électrique 2.

Le dispositif de synchronisation 72 est alors configuré pour :
- récupérer (flèche 10) une mesure de la tension électrique via l'étage primaire 6a du générateur 6 électrique dans une étape E1,
- commander (flèche 13) via l'intermédiaire du convertisseur 4 l'alimentation électrique de la charge électrique 2 par la source auxiliaire 3 à une tension électrique synchronisée sur les caractéristiques de fréquence et de phase de la tension électrique de l'étage primaire 6a, dans une étape E3. En effet, les caractéristiques de fréquence et de phase de la tension électrique de l'étage primaire 6a n'étant pas affectées par la charge électrique 2, l'étage primaire 6a peut servir de référence de fréquence fiable. Ainsi, la synchronisation effectuée à partir des caractéristiques de sortie de l'étage primaire 6a, isolées des variations de charge dû à la charge électrique 2, permet d'optimiser la rapidité de convergence des caractéristiques de fréquence et de phase de la tension électrique de la source auxiliaire 3 et de la tension électrique de l'étage primaire 6a, et de robustifier la synchronisation de différentes sources électriques sur un même réseau électrique alternatif.

Une telle synchronisation est à titre d'exemple réalisée par un asservissement via une boucle à verrouillage de phase PLL de la fréquence électrique de la source auxiliaire 3 sur la fréquence électrique de l'étage primaire 6a de la source principale 1.

En effet, dans le contexte de source rotative, les rotors des différents étages de la génératrice 6 tournent à la même vitesse. Les tensions réseaux générées en sortie de l'étage tertiaire 6c ont donc une fréquence proportionnelle aux tensions générées par l'étage primaire 6a. Le ratio entre lesdites fréquences est fonction du nombre de paires de pôle de l'étage primaire 6a et de l'étage tertiaire 6c.

Le dispositif de synchronisation 72 peut comprendre un module (non représenté) afin d'assurer la synchronisation lorsque le ratio entre le nombre de paires de pôles du générateur à aimants permanents 6a et du générateur principal 6c n'est pas égale à 1. Dans ce cas, si le générateur à aimants permanents 6a a un nombre de paires de pôles différent, l'angle de calage est multiplié par le ratio entre le nombre de paires de pôles du générateur à aimants permanents 6a et du générateur principal 6c.

Egalement, si le générateur à aimants permanents 6a n'est pas aligné avec le générateur principal 6c, i.e. présente un décalage d'angle constant, une compensation sur l'angle de calage est appliquée.

De plus, le convertisseur 4 étant connecté en parallèle de la source principale 1, le dispositif de synchronisation 72 peut être également configuré pour :
- récupérer (flèche 12) une mesure de la fréquence électrique aux bornes du convertisseur 4 et déterminer la fréquence de la tension électrique en sortie de la source principale 1, c'est-à-dire la fréquence du bus électrique alimentant la charge électrique 2,
- comparer la mesure de fréquence de la tension électrique avec la valeur seuil de fréquence dans une étape E2, et
- exécuter la commande de l'étape E3 (flèche 13) lorsque la fréquence d'une tension électrique en sortie de la source principale 1 atteint la valeur seuil de fréquence donnée de manière à fournir un complément d'alimentation électrique à la charge électrique 2.

En alternative, le dispositif de synchronisation 72 peut déduire de la mesure de fréquence électrique de la source principale 1 le niveau d'utilisation de la source principale 1 rotative, comparer ce niveau d'utilisation par rapport au niveau d'utilisation limite, traduisant un niveau de surutilisation de cette source, et commander l'alimentation de la source auxiliaire 3 en fonction du résultat de cette comparaison.
L'ensemble des opérations décrites ci-dessus sont réalisées en temps réel et de manière continue au cours du temps.

Avantageusement, le système de synchronisation (100) décrit pour une source principale 1 rotative est particulièrement simple à mettre en oeuvre, celui-ci ne nécessitant aucune modification (ex : prédimensionnement des caractéristiques statiques en tension, reconfiguration du générateur 6 électrique) des sources rotatives (ex : éolienne de secours, turbines) existantes.

En conséquence, le système de synchronisation (100) décrit permet d'utiliser les tensions alternatives générées par l'étage primaire d'une génératrice multi-étages comme référence pour la synchronisation (par PLL) de la source auxiliaire sur le réseau électrique. Cette solution permet de s'affranchir des contraintes liées à la qualité du réseau électrique comme les harmoniques de tensions, les déséquilibres et les courts-circuits, etc....

Comme les formes d'ondes des tensions de l'étage primaire 6c ne sont pas dépendantes du réseau électrique, le système de synchronisation (100) décrit permet de s'affranchir des perturbations liées au réseau et ainsi avoir un système de synchronisation plus robuste.

De plus, le système de synchronisation (100) décrit permet d'atteindre la convergence de synchronisation beaucoup plus rapidement que dans le casoù la tension en sortie de la génératrice est utilisée.

Le système de synchronisation (100) décrit permet donc de robustifier la synchronisation de différentes sources électriques sur un même réseau électrique alternatif. En conséquence, ce type de commande est particulièrement adapté aux applications aéronautiques par la robustesse qu'elle implique et sa simplicité d'utilisation d'autant que les générateurs aéronautiques sont des générateurs multi-étages.

## Revendications

1. Système de synchronisation (100) de sources d'énergie couplées sur un réseau électrique alimentant au moins une charge électrique (2) d'un aéronef, ledit système comprenant :
- une source (1) principale d'énergie électrique alimentant ladite charge électrique comprenant une génératrice (6) multi-étage, ladite génératrice (6) multi-étage comprenant :
• un étage primaire (6a) comprenant un générateur à aimants permanents,
• un étage secondaire (6b) comprenant une excitation, et
• un étage tertiaire (6c) comprenant un générateur principal ;
- une source (3) auxiliaire d'énergie électrique alimentant ladite charge électrique (2);
**caractérisé en ce qu'**il comporte en outre un dispositif de synchronisation (72) de la source (1) principale et de la source (3) auxiliaire configuré pour :
• mesurer une tension électrique en sortie de l'étage primaire (6a) de la source (1) principale, et
• commander l'alimentation de ladite charge électrique (2) par la source auxiliaire (3) d'énergie électrique à une tension électrique asservie sur les caractéristiques de fréquence et de phase de la tension électrique de l'étage primaire (6a).

2. Système de synchronisation (100) de sources d'énergie couplées selon la revendication précédente dans lequel la source auxiliaire (3) d'énergie électrique est connectée en parallèle de la source principale (1) par l'intermédiaire d'un convertisseur (4) de puissance continue alternatif DC/ AC.

3. Système de synchronisation (100) de sources d'énergie couplées selon l'une des revendications précédentes dans lequel la source (1) principale d'énergie électrique correspond à une source (1) rotative génératrice d'énergie électrique.

4. Système de synchronisation (100) de sources d'énergie couplées selon l'une des revendications précédentes dans lequel la source principale (1) est une éolienne de secours, un turbogénérateur, un groupe auxiliaire de puissance, un générateur de fréquence variable ou un générateur à entrainement intégré.

5. Système de synchronisation (100) de sources d'énergie couplées selon l'une des revendications précédentes dans lequel le système comprend un dispositif de contrôle (71) configuré pour commander l'alimentation électrique de ladite charge électrique (2) par la source principale (1) rotative génératrice d'énergie électrique, la fréquence de rotation de la source principale (1) rotative étant subite ou régulée dans un intervalle de fréquence de rotation prédéterminé.

6. Système de synchronisation (100) de sources d'énergie couplées selon l'une des revendications précédentes dans lequel ledit dispositif de synchronisation (72) est configuré pour commander via l'intermédiaire du convertisseur (4) l'alimentation électrique de ladite charge électrique (2) par la source auxiliaire (3) d'énergie électrique à une tension électrique asservie sur les caractéristiques de fréquence et de phase de la tension électrique de l'étage primaire (6a) lorsqu'une fréquence d'une tension électrique en sortie de la source principale (1) atteint une valeur seuil de fréquence donnée, de manière à fournir un complément d'alimentation électrique à la charge électrique (2).

7. Procédé de synchronisation de sources d'énergie couplées sur un réseau électrique alimentant au moins une charge électrique d'un aéronef, mise en oeuvre par un système de synchronisation (100) de sources d'énergie couplées sur un réseau électrique alimentant ladite charge électrique, ledit système comprenant :
- une source (1) principale d'énergie électrique alimentant ladite charge électrique comprenant une génératrice (6) multi-étage, ladite génératrice (6) multi-étage comprenant :
• un étage primaire (6a) comprenant un générateur à aimants permanents,
• un étage secondaire (6b) comprenant une excitation, et
• un étage tertiaire (6c) comprenant un générateur principal ;
- une source (3) auxiliaire d'énergie électrique alimentant ladite charge électrique (2);
- un dispositif de contrôle auxiliaire(72);
ledit procédé étant **caractérisé en ce qu'**il comprend les étapes consistant à :
- mesurer (E1), par le dispositif de synchronisation , une tension électrique en sortie de l'étage primaire(6a),
- commander (E3) , par le dispositif de synchronisation(72), l'alimentation de ladite charge électrique (2) par la source auxiliaire (3) d'énergie électrique à une tension électrique asservie sur les caractéristiques de fréquence et de phase de la tension électrique de l'étage primaire (6a).

8. Procédé de synchronisation de sources d'énergie couplées selon la revendication précédente dans lequel ledit procédé comprend en outre une étape consistant à :
- comparer (E2) la fréquence des tensions électriques en sortie de l'étage primaire (6a) à une valeur seuil de fréquence donnée et à exécuter l'étape de commande (E3) par ledit dispositif de synchronisation (72) lorsque la fréquence d'une tension électrique en sortie de la source principale (1) atteint la valeur seuil de fréquence donnée de manière à fournir un complément d'alimentation électrique à la charge électrique (2).

9. Produit programme d'ordinateur comprenant des instructions de code pour l'exécution d'un procédé selon l'une quelconque des revendications 7 et 8 lorsque ce programme est exécuté par un processeur.

## Patentansprüche

1. System zur Synchronisation (100) von Energiequellen, die an ein elektrisches Netzwerk gekoppelt sind, das mindestens eine elektrische Ladung (2) eines Luftfahrzeugs versorgt, wobei das System umfasst:
- eine Hauptquelle (1) elektrischer Energie, die die elektrische Ladung versorgt, einen mehrstufigen Generator (6) umfassend, wobei der mehrstufige Generator (6) umfasst:
• eine Primärstufe (6a), die einen Permanentmagnetgenerator umfasst,
• eine Sekundärstufe (6b), die eine Ansteuerung umfasst, und
• eine Tertiärstufe (6c), die einen Hauptgenerator umfasst;
- eine Hilfsquelle (3) elektrischer Energie, die die elektrische Ladung (2) versorgt;
**dadurch gekennzeichnet, dass** sie ferner eine Synchronisationsvorrichtung (72) der Hauptquelle (1) und der Hilfsquelle (3) aufweist, konfiguriert zum:
• Messen einer elektrischen Spannung am Ausgang der Primärstufe (6a) der Hauptquelle (1), und
• Steuern der Versorgung der elektrischen Ladung (2) durch die Hilfsquelle (3) elektrischer Energie mit einer elektrischen Spannung, die auf die Frequenz- und Phasencharakteristiken der elektrischen Spannung der Primärstufe (6a) reguliert ist.

2. System zur Synchronisation (100) von gekoppelten Energiequellen nach dem vorhergehenden Anspruch, wobei die Hilfsquelle (3) elektrischer Energie parallel zur Hauptquelle (1) über einen DC/AC-Wechselstrom-Gleichstrom-Leistungswandler (4) geschaltet ist.

3. System zur Synchronisation (100) von gekoppelten Energiequellen nach einem der vorhergehenden Ansprüche, wobei die Hauptquelle (1) elektrischer Energie einer rotierenden Quelle (1) entspricht, die elektrische Energie erzeugt.

4. System zur Synchronisation (100) von gekoppelten Energiequellen nach einem der vorhergehenden Ansprüche, wobei die Hauptquelle (1) eine Staudruckturbine, ein Turbogenerator, ein Hilfstriebwerk, ein Generator mit veränderbarer Frequenz oder ein Generator mit integriertem Antrieb ist.

5. System zur Synchronisation (100) von gekoppelten Energiequellen nach einem der vorhergehenden Ansprüche, wobei das System eine Steuervorrichtung (71) umfasst, die konfiguriert ist, um die Stromversorgung der elektrischen Ladung (2) durch die rotierende Hauptquelle (1) zu steuern, die elektrische Energie erzeugt, wobei die Rotationsfrequenz der rotierenden Hauptquelle (1) erfahren wird oder innerhalb eines vorbestimmten Rotationsfrequenzbereichs geregelt wird.

6. System zur Synchronisation (100) von gekoppelten Energiequellen nach einem der vorhergehenden Ansprüche, wobei die Synchronisationsvorrichtung (72) konfiguriert ist, um mittels dem Wandler (4) die Stromversorgung der elektrischen Ladung (2) durch die Hilfsquelle (3) elektrischer Energie mit einer elektrischen Spannung zu steuern, die auf die Frequenz- und Phasencharakteristiken der elektrischen Spannung der Primärstufe (6a) reguliert ist, wenn eine Frequenz einer elektrischen Spannung am Ausgang der Hauptquelle (1) einen gegebenen Frequenzschwellenwert erreicht, um eine zusätzliche Stromversorgung für die elektrischen Ladung (2) bereitzustellen.

7. Verfahren zur Synchronisation gekoppelter Energiequellen in einem elektrischen Netzwerk, das mindestens eine elektrische Ladung eines Luftfahrzeugs versorgt, umgesetzt durch ein System zur Synchronisation (100) von Energiequellen, die an ein elektrisches Netzwerk gekoppelt sind, das die elektrische Ladung versorgt, wobei das System umfasst:
- eine Hauptquelle (1) elektrischer Energie, die die elektrische Ladung versorgt, einen mehrstufigen Generator (6) umfassend, wobei der mehrstufige Generator (6) umfasst:
• eine Primärstufe (6a), die einen Permanentmagnetgenerator umfasst,
• eine Sekundärstufe (6b), die eine Ansteuerung umfasst, und
• eine Tertiärstufe (6c), die einen Hauptgenerator umfasst;
- eine Hilfsquelle (3) für elektrische Energie, die die elektrische Ladung (2) versorgt;
- eine Hilfssteuervorrichtung (72);
wobei das Verfahren **dadurch gekennzeichnet ist, dass** es die Schritte umfasst, die bestehen aus:
- Messen (E1), durch die Synchronisationsvorrichtung, einer elektrischen Spannung am Ausgang der Primärstufe (6a),
- Steuern (E3), durch die Synchronisationsvorrichtung (72), der Versorgung der elektrischen Ladung (2) durch die Hilfsquelle (3) elektrischer Energie mit einer elektrischen Spannung, die auf die Frequenz- und Phasencharakteristiken der elektrischen Spannung der Primärstufe (6a) reguliert ist.

8. Verfahren zur Synchronisation von gekoppelten Energiequellen nach dem vorhergehenden Anspruch, wobei das Verfahren ferner einen Schritt umfasst, bestehend aus:
- Vergleichen (E2) der Frequenz der elektrischen Spannungen am Ausgang der Primärstufe (6a) mit einem gegebenen Frequenzschwellenwert, und Ausführen des Steuerschritts (E3) durch die Synchronisationsvorrichtung (72), wenn die Frequenz einer elektrischen Spannung am Ausgang der Hauptquelle (1) den gegebenen Frequenzschwellenwert erreicht, um eine zusätzliche Stromversorgung für die elektrische Ladung (2) bereitzustellen.

9. Computerprogrammprodukt, Codeanweisungen zur Ausführung eines Verfahrens nach einem der Ansprüche 7 und 8 umfassend, wenn dieses Programm von einem Prozessor ausgeführt wird.

## Claims

1. A system for synchronizing (100) power sources coupled to an electrical network supplying at least one electrical load (2) of an aircraft, said system comprising:
- a main source (1) of electrical energy supplying said electrical load comprising a multi-stage generator (6), said multi-stage generator (6) comprising :
• a primary stage (6a) comprising a permanent magnet generator,
• a secondary stage (6b) comprising an excitation, and
• a tertiary stage (6c) comprising a main generator;
- an auxiliary source (3) of electrical energy supplying said electrical load (2);
**characterized in that** it further comprises a device (72) for synchronizing the main source (1) and the auxiliary source (3) configured to :
• measure an electrical voltage at the output of the primary stage (6a) of the main source (1), and
• control the supply of said electrical load (2) by the auxiliary source (3) of electrical energy at an electrical voltage slaved to the frequency and phase characteristics of the electrical voltage of the primary stage (6a).

2. A system for synchronizing (100) coupled power sources of the preceding claim wherein the auxiliary source (3) of electrical energy is connected in parallel to the main source (1) via a DC/AC power converter (4).

3. A system for synchronizing (100) coupled power sources according to any of the preceding claims wherein the main source (1) of electrical energy corresponds to a rotating source (1) generating electrical energy.

4. A system for synchronizing (100) coupled power sources according to any of the preceding claims wherein the main source (1) is a backup wind turbine, a turbine generator, an auxiliary power unit, a variable frequency generator or an integrated drive generator.

5. A system for synchronizing (100) coupled power sources according to any of the preceding claims wherein the system comprises a controller (71) configured to control the electrical supply of said electrical load (2) by the rotating main source (1) generating electrical energy, the rotational frequency of the rotating main source (1) being sudden or regulated within a predetermined rotational frequency range.

6. A system for synchronizing (100) coupled power sources according to one of the preceding claims wherein said synchronization device (72) is configured to control via the converter (4) the power supply of said electric load (2) by the auxiliary power source (3) at an electric voltage slaved to the frequency and phase characteristics of the electric voltage of the primary stage (6a) when a frequency of an electric voltage output from the primary source (1) reaches a given frequency threshold value so as to provide an additional power supply to the electrical load (2).

7. A method of synchronizing power sources coupled to an electrical network supplying at least one electrical load of an aircraft, implemented by a system for synchronizing (100) power sources coupled to an electrical network supplying said electrical load, said system comprising:
- a main source (1) of electrical energy supplying said electrical load comprising a multi-stage generator (6), said multi-stage generator (6) comprising :
• a primary stage (6a) comprising a permanent magnet generator,
• a secondary stage (6b) comprising an excitation, and
• a tertiary stage (6c) comprising a main generator;
- an auxiliary source (3) of electrical energy supplying said electrical load (2);
- an auxiliary control device(72);
said method being **characterized in that** it comprises the steps of:
- measuring (E1), by the synchronization device, an electric voltage at the output of the primary stage (6a),
- controlling (E3), by the synchronization device (72), the supply of said electrical load (2) by the auxiliary source (3) of electrical energy at an electrical voltage slaved to the frequency and phase characteristics of the electrical voltage of the primary stage (6a).

8. A method of synchronizing coupled power sources according to the preceding claim wherein said method further comprises a step of:
- comparing (E2) the frequency of the electric voltages output by the primary stage (6a) with a given frequency threshold value and executing the control step (E3) by said synchronization device (72) when the frequency of an electric voltage output by the main source (1) reaches the given frequency threshold value so as to provide additional electric power to the electric load (2).

9. A computer program product comprising code instructions for executing a method according to any one of claims 7 and 8 when said program is executed by a processor.
